(19) Europäisches Patentamt

European Patent Office

Office européen des brevets

(11) Veröffentlichungsnummer: **0 360 177 B1**

# (12) EUROPÄISCHE PATENTSCHRIFT

(45) Veröffentlichungstag der Patentschrift: **08.06.94**

(21) Anmeldenummer: **89117164.7**

(22) Anmeldetag: **16.09.89**

(51) Int. Cl.⁵: **G02B 6/42**

(54) Optischer Sende- und/oder Empfangsbaustein.

(30) Priorität: **20.09.88 DE 3831839**

(43) Veröffentlichungstag der Anmeldung:
**28.03.90 Patentblatt 90/13**

(45) Bekanntmachung des Hinweises auf die
Patenterteilung:
**08.06.94 Patentblatt 94/23**

(84) Benannte Vertragsstaaten:
**AT BE CH DE ES FR GB IT LI NL SE**

(56) Entgegenhaltungen:
EP-A- 0 091 738          EP-A- 0 094 274
EP-A- 0 229 557          GB-A- 2 058 390
GB-A- 2 151 351          US-A- 4 398 792

PATENT ABSTRACTS OF JAPAN, Band 8, Nr.
75 (P-266), 7. April 1984 ; & JP-A-58220111
(NIPPON DENSHIN DENWA KOSHA)
21.12.1983

PATENT ABSTRACTS OF JAPAN, Band 8, Nr.
92 (P-271), 27. April 1984 ; & JP-A-59007312
(NIPPON DENKI) 14.01.1984

PATENT ABSTRACTS OF JAPAN, Band 10,
Nr. 327 (P-513), 7. November 1986 ; & JP-
A-61132908 (NTT) 20.06.1986

FUNKSCHAU, Band 58, Nr. 4, 1986, Seiten
30-33, München, DE; R. AUER: "Neue Audiotechnik aus dem Schwarzwald"

(73) Patentinhaber: **Alcatel SEL Aktiengesellschaft
Lorenzstrasse 10
D-70435 Stuttgart(DE)**

(72) Erfinder: **Veith, Gustav, Dr.
Münchinger Strasse 22
D-7254 Hemmingen(DE)**

(74) Vertreter: **Pohl, Herbert, Dipl.-Ing et al
Alcatel SEL AG
Patent- und Lizenzwesen
Postfach 30 09 29
D-70449 Stuttgart (DE)**

**Beschreibung**

Die Erfindung betrifft einen optischen Sende- oder Empfangsbaustein mit einem Licht ausstrahlenden oder empfangenden optoelektronischen Bauelement und einem Lichtsignale übertragenden Lichtwellenleiter, an dem die Lichteinkopplung oder -auskopplung erfolgt.

Solche optischen Bausteine dienen z.B. als Signalsender oder -empfänger für Lichtwellenleiter-Übertragungsstrecken, die in der Fernmeldetechnik zunehmend verwendet werden. Das etwa in einem Laser erzeugte Licht wird dazu in einen Lichtwellenleiter in Form einer Glasfaser, die als Übertragungsmedium dient, eingekoppelt und auf der Empfangsseite der Übertragungsstrecke auf ein optoelektronisches Empfängerelement ausgekoppelt. Um Energieverluste bei der Lichtein- und -auskopplung möglichst zu vermeiden, muß das optoelektronische Bauelement exakt auf die Stirnfläche des jeweiligen lichtführenden Glasfaserkernes ausgerichtet sein. Dabei wird eine zuverlässige, langzeit- und temperaturstabile Einkopplung der Lichtstrahlung in die Glasfaser gefordert.

Diese Forderung wird bei bekannten Sende- und Empfangsbausteinen durch aufwendige feinmechanische Konstruktionen gelöst (DE PS 30 46 415, FR-OS 2 591 763), die sehr enge Toleranzen einzuhalten haben und sehr stabile, aufwendige Werkstoffe benötigen. Dies ergibt hohe Herstellkosten für die optischen Bausteine. Außerdem ist ihre Langzeitstabilität immer noch ungenügend.

Bei CD-Plattenspielern ist es bekannt, den Laserstrahl, mit der die auf der Platte in digitaler Form enthaltene Toninformation ausgelesen wird, in vertikaler Richtung, d.h. in Richtung senkrecht auf die Platte zu fokussieren. Hierbei ist eine Regelgenauigkeit von ± 1 $\mu$m erforderlich. Außerdem muß die Abtasteinheit auf den sehr schmalen Informationsspuren auf der Platte nachgeführt werden. Die Abtasteinheit wird dazu in radialer Richtung verstellt, wobei die Genauigkeit ± 0,1 $\mu$m beträgt (Funkschau Nr. 4/1986, Seiten 30 bis 33; W.H. Lee, "Optical technology for compact disk pickups"). Die erforderlichen Genauigkeiten haben einen hohen Aufwand zur Folge. Außerdem ist es mit der bekannten Abtasteinrichtung nicht möglich, den Laserstrahl in zwei oder mehr Dimensionen zu verschieben.

Der Erfindung liegt die Aufgabe zugrunde, einen optischen Sende- oder Empfangsbaustein zu schaffen, bei dem eine uneingeschränkt langzeitstabile Lichteinkopplung oder Lichtauskopplung gewährleistet ist.

Diese Aufgabe wird bei einem optischen Baustein der eingangs genannten Art dadurch gelöst, daß er mit einer Regeleinrichtung versehen ist, durch die die Lichtein- bzw. -auskopplung zwischen dem optoelektronischen Bauelement und dem Lichtwellenleiter aufgrund von Messungen der Reflektionsfaktorunterschiede von Kern- und Mantelbereich der Stirnfläche des Lichtwellenleiters gesteuert wird um die Lichtein -bzw. -auskopplung möglichsts verlustfrei zu halten.

Ein für die Regelung sehr leicht auszuwertendes Meßsignal läßt sich dadurch erreichen, daß der Mantelbereich auf der Stirnfläche des Lichtwellenleiters mit einer Verspiegelung versehen ist. Zusätzlich kann auch der Kernbereich des Lichtwellenleiters mit einer Antireflexbeschichtung versehen werden.

Andere vorteilhafte Weiterbildungen der Erfindung sind den Unteransprüchen zu entnehmen.

Die Vorteile der Erfindung liegen unter anderem darin, daß sich die Langzeitstabilität der Lichteinkopplung oder Lichtauskopplung mit einfachen Mitteln erreichen läßt. Es können in der Unterhaltungselektronik verwendete und damit zu geringen Kosten verfügbare Bauteile verwendet werden und die notwendigen Änderungen lassen sich ebenfalls mit geringem Aufwand durchführen.

Die erforderliche Justier-Toleranz ist wesentlich geringer, da der lichtleitende Kern einer Einmodenfaser üblicherweise einen Durchmesser von 9 bis 10 um aufweist.

Ausführungsbeispiele der Erfindung werden im folgenden anhand der Zeichnung erläutert. Es zeigen:

| | |
|---|---|
| Fig. 1 | einen optischen Sendebaustein mit aktivgeregelter Laser-Glasfaser-Lichteinkopplung, |
| Fig. 2 A bis 2 C | die Stirnfläche eines Lichtwellenleiters bei verschiedenen Justierungen der Lichteinkopplung, |
| Fig. 3 A bis 3 C | ein in dem erfindungsgemäßen optischen Baustein verwendeter Detektor bei den Justierungen gemäß den Fig. 2 A bis 2 C, |
| Fig. 4 | ein anderes Ausführungsbeispiel eines erfindungsgemäßen optischen Sende- oder Empfangsbausteins, |
| Fig. 5 | eine Ausschnittsvergrößerung aus dem Baustein gemäß Fig. 4 und |
| Fig. 6 | einen in einem weiteren Ausführungsbeispiel der Erfindung verwendeten Detektor. |

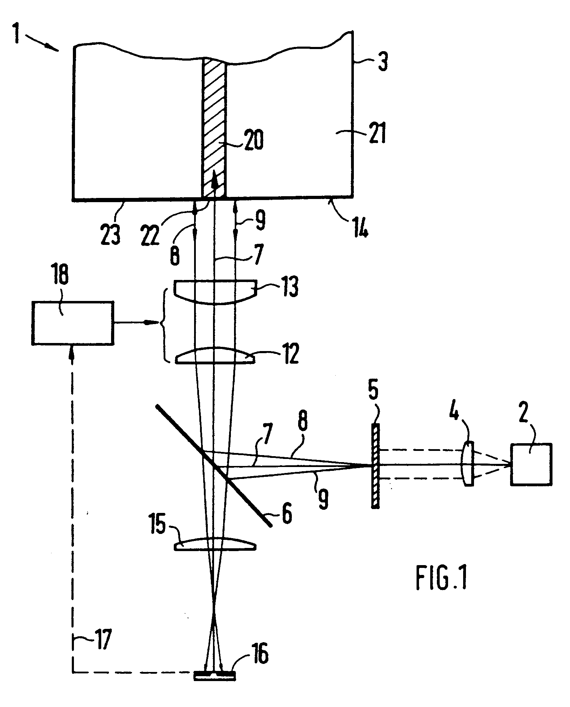

Ein optischer Sende- oder Empfangsbaustein - im folgenden als Sender oder ggf. Empfänger bezeichnet - 1 weist eine Laserdiode 2, die die zu übertragenden Lichtsignale erzeugt, und einen Lichtwellenleiter 3 auf, der als Übertragungsmedium für die Lichtsignale dient und von dem in der Zeichnung lediglich das senderseitige Ende - und zwar nicht maßstäblich - dargestellt ist (Fig. 1).

Das von der Laserdiode 2 erzeugte Licht gelangt über eine Kollimatorlinse 4 zu einem Beugungsgitter 5 und von diesem zu einem Strahlenteiler 6. Neben einem ungebeugten Strahl 7 sind es gebeugte Strahlen erster Ordnung 8, 9 und gebeugte Strahlen höherer Ordnung - in der Zeichnung nicht dargestellt und im folgenden auch nicht mehr betrachtet -, die von dem Beugungsgitter 5 zu dem Strahlenteiler 6 gelangen.

Das Beugungsgitter 5 ist als Kreuzgitter ausgeführt, es erzeugt deshalb auch in einer Ebene senkrecht zu der Zeichenebene gebeugte Strahlen erster Ordnung 10, 11, die in Fig. 1 nicht dargestellt sind, die aber aus den Fig. 2 und 3 ersichtlich sind.

An dem Strahlenteiler 6, der z.B. als halbdurchlässiger Spiegel ausgeführt ist, werden die Laserlichtstrahlen reflektiert und gelangen über ein bewegliches Linsensystem, das aus einer Kollimatorlinse 12 und aus einer Objektivlinse 13 besteht, zu der Stirnfläche 14 des Lichtwellenleiters 3. An der Stirnfläche 14 werden die Strahlen 7 bis 11 in einer noch zu beschreibenden Weise reflektiert und gelangen über das Linsensystem 12, 13, durch den Strahlteiler 6 hindurch und über eine Linse 15 zu einem Detektor 16. Die Auswertung in dem Detektor 16 oder in einer angeschlossenen Auswerteschaltung ergibt ein Fehlersignal, das über eine Steuerleitung 17 zu einem elektromechanischen Versteller 18 übertragen wird. Dieser Versteller 18 verschiebt entsprechend das Linsensystem 12, 13 in x- und y-Richtung, d.h. in einer Ebene parallel zu der Stirnfläche 14.

Der Lichtwellenleiter 3 weist bekanntlich einen lichtführenden Kern 20 und einen den Kern umgebenden Mantel 21 auf. Bei einer Einmodenfaser weist der Kern 20 üblicherweise einen Durchmesser von 9 bis 10 μm auf.

Die erfindungsgemäße Regelung der verlustfreien Einkopplung des Laserlichts in den Lichtwellenleiter 3 beruht darauf, daß die Sollstelle für die Fokussierung des Laserlichtstrahls, d.h. der Kernbereich 22 der Stirnfläche 14 des Lichtwellenleiters 3 einen anderen Licht-Reflektionsfaktor aufweist als der umgebende Mantelbereich 23. Bei einem relativem Brechungsindexsprung zwischen dem Kernbereich 22 und dem Mantelbereich 23 von etwa 1 % ergibt sich eine relative Änderung des Reflektionsvermögens von etwa 5 % zwischen Kern- und Mantelbereich. Diese Änderung des Reflektionsvermögens ist im allgemeinen zu gering, um zuverlässige Meßwerte für die Regelung zu erhalten. Deshalb wird die Stirnfläche 14 des Lichtwellenleiters 3 so behandelt, daß sich die Reflektionsfaktoren $R_K$ des Kernbereichs 22 und $R_M$ des Mantelbereichs 23 stärker unterscheiden. Dabei gibt es drei Möglichkeiten der Bearbeitung:

a) eine stirnseitige Verspiegelung des Mantelbereichs 23, z.B. in Form einer Aluminium-Beschichtung,

b) eine stirnseite Antireflexbeschichtung des Kernbereichs 22, oder

c) eine stirnseite Verspiegelung des Mantelbereichs 23 verbunden mit einer Entspiegelung des Kernbereichs 22.

Die Bearbeitungsverfahren a) bis c) lassen sich auf fotolithographischem Wege einfach durchführen. Dabei lassen sich die lichtführenden Eigenschaften des Glasfaser-Kerns 20 zum Markieren des Kernbereichs 22 und zum Durchführen fotolithographischer Belichtungsschritte ausnutzen, indem in die Faser rückseitig Licht eingekoppelt wird.

Aus der nachstehenden Tabelle sind die durch die beschriebenen Bearbeitungen der Stirnfläche 14 erreichbaren Reflexionsfaktoren $R_K$ des Kernbereichs und $R_M$ des Mantelbereichs der Stirnfläche 14 und die sich daraus ergebenden Reflexionsfaktor-Verhältnisse $r = R_M/R_K$ ersichtlich.

| Präparation der Laserstirnfläche | $R_K$ (%) | $R_M$ (%) | $r = R_M/R_K$ |
|---|---|---|---|
| Ohne Beschichtung | 3,5 | 3,7* | 1,06 |
| Verspiegelung Mantel | 3,5 | 99,0 | 28 |
| Entspiegelung Kern | 1,0 | 3,7* | 3,7 |
| Verspiegelung Mantel & Entspiegelung Kern | 1,0 | 99,0 | 99 |

* Annahme: Brechungsindexsprung (K/M): n = 1 %

Das Verfahren a) ist technologisch am einfachsten durchzuführen und liefert für den Mantelbereich 23 einen 28mal größeren Reflexionsfaktor als der des Kernbereichs 22.

Das Verfahren b) liefert zwar für den Mantelbereich einen nur um den Faktor 3,7 größeren Reflexionsfaktor, es hat jedoch den Vorteil, daß Rückreflektionen auf die Laserdiode deutlich reduziert werden. Dies kann bei hochwertigen Laserbausteinen wichtig sein, z.B. bei Verwendung von Einmoden-Laserdioden mit großer Kohärenzlänge.

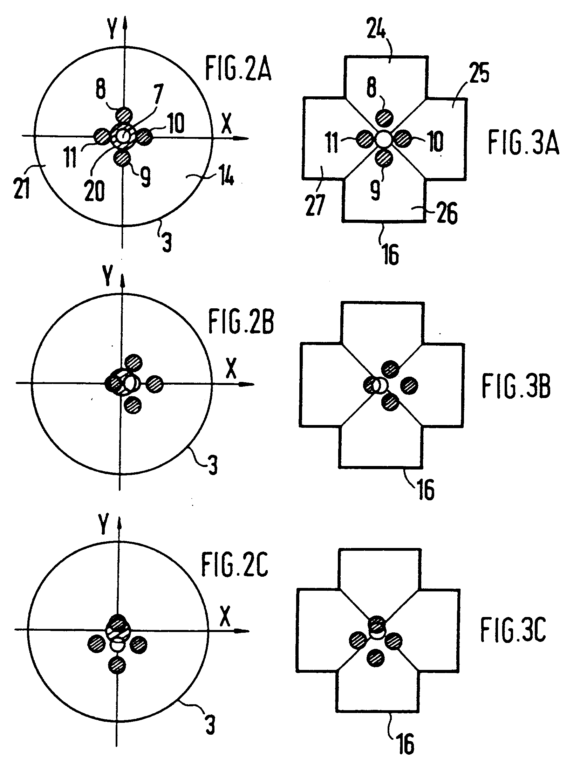

Das Verfahren c) verbindet die Vorteile des Verfahrens a), d.h. hohe Reflexionsunterschiede zwischen Kern und Mantel, mit denen des Verfahrens b), d.h. verminderte Reflexion der Faserkern-Stirnfläche, und liefert für den Mantelbereich einen den Faktor 99 größeren Reflexionsfaktor als der des Kernbereichs. Es erfordert allerdings zwei verschiedene Präparationsschritte. Bei korrekter Einstellung des Linsensystems 12, 13 wird der ungebeugte Laserlicht-Strahl 7 exakt auf den Kernbereich 22 fokussiert und damit sogut wie möglich in den Lichtwellenleiter 3 eingekoppelt (vergl. Fig. 2 A). Gleichzeitig treffen die gebeugten Strahlen erster Ordnung 8, 9, 10, 11 auf den Mantelbereich 23 des Lichtwellenleiters, der wie erläutert ein erheblich höheres Reflexionsvermögen als der Kernbereich 22 aufweist. Dabei genügt es naturgemäß, daß das Reflexionsvermögen bei der Betriebwellenlänge der Laserdiode 2 erhöht ist. Bei korrekter Justierung werden also die Teilstrahlen 8 bis 11 alle gleichmäßig zurückreflektiert und treffen über die Linsen 13, 12 und 15 sowie den Strahlenteiler 6 auf den dahinter liegenden Detektor 16 auf. Dieser Detektor 16 ist als Quadranten-Detektor ausgeführt (vergl. Fig. 3 A bis 3 C), er weist also vier Quadranten oder Segmente 24, 25, 26 und 27 auf, die jeweils das auf ihrer Oberfläche auftretende Licht unabhängig von den anderen drei Quadranten feststellen.

Die Linse 15 sorgt dafür, daß bei korrekter Justierung alle vier Detektoren-Quadranten 24, 25, 26 und 27 gleichermaßen von einem zurückreflektierten Teilstrahl 8 bis 11 getroffen werden (Fig. 2 A und 3 A).

Bei einer Fehljustierung in der x- oder y-Achse der Stirnfläche 14 werden die Detektor-Quadranten 24 bis 27 zum Teil ungleichmäßig von den zurückreflektierten Strahlen getroffen. Die von den vier Quadranten 24, 25, 26 und 27 erzeugten Signale werden im folgenden mit D1, D2, D3 bzw. D4 bezeichnet. Das bei ungleichmäßigen Auftreffen der Strahlen entstehende Fehlersignal

D2 - D4 (X-Achse) oder
D1 - D3 (Y-Achse) oder
(D1 - D3) ± (D2 - D4) (beide Achsen)

kann unmittelbar zum Einstellen des Laserlicht-Strahls 7 auf den Kernbereich 22 des Lichtwellenleiters verwendet werden. Dabei bewirkt das Fehlersignal über den elektromechanichen Versteller 18 eine Verschiebung des zur Fokussierung dienenden Linsensystems 12, 13 in x- und/oder y-Richtung, und zwar bis zum Erreichen der Solleinstellung mit optimaler Lichteinkopplung.

Eine geregelte Verstellung der Fokussierung in z-Richtung, d.h. in Richtung der Strahlachse, ist im Normalfall nicht erforderlich, da die Tiefenschärfe der Lichtfleckabbildung auf der Stirnfläche eine ausreichende Toleranz aufweist, die sich bei der Herstellung und Voreinstellung des optischen Senderbausteins 1 ohne weiteres einhalten läßt.

Sollte aber trotzdem eine Regelung der Fokussierung in Richtung der Strahlachse, d.h. eine Regelung des Abstands zwischen dem Linsensystem 12, 13 und der Stirnfläche 14 erforderlich sein - z.B. für eine Laserlicht-Phasenregelung bei der Laser-Faser-Kopplung -, so kann das ohne weiteres mit einer astigmatischen Fokus-Regelung durchgeführt werden. Der Quadranten-Detektor 16 kann dabei weiterverwendet werden, es muß jedoch eine Zylinderlinse in den reflektierten Strahlengang eingeführt werden, mit deren Hilfe bei einer Dejustierung des Laserlichtstrahls eine astigmatische Verzerrung des reflektierten Lichtstrahls erzeugt wird, die von dem Detektor 16 festgestellt werden kann.

Der optische Sender 1 kann auch mit einem an sich bekannten holographischen optischen Element realisiert werden, das gleichzeitig die Funktion des Strahlenteilers 6 und der optisch abbildenden Systeme 12, 13, 15 übernehmen kann. Dabei ist es auch sinnvoll, die Laserdiode 2 und den Quadranten-Detektor 16 in einem hybriden Bauelement zu kombinieren. Dadurch vereinfacht sich der Aufbau des optischen Senders oder Empfängers 1 weiter.

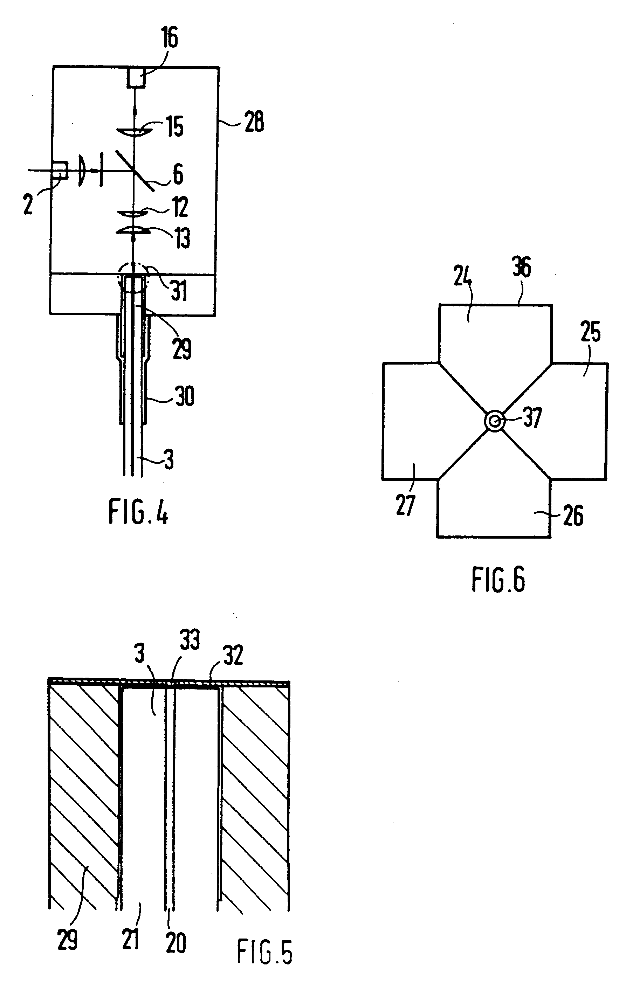

Bei dem aus Fig. 4 und 5 in schematischer Darstellung ersichtlichen Ausführungsbeispiel des erfindungsgemäßen optischen Sende- oder Empfangsbausteins sind dessen Bestandteile - die mit den gleichen Bezugzeichen wie in den Fig. 1 bis 3 versehen sind - in einem Gehäuse 28 untergebracht. Von Fig. 1 unterscheidet sich dieses Ausführungsbeispiel dadurch, daß das Endstück des Lichtwellenleiters 3 (in eine passiven Führungshülse 29 fixiert ist, die ihrerseits in einer Schutzhülse 30 gesteckt ist.

Fig. 5 ist eine vergrößerte Darstellung des in Fig. 4 durch einen strichpunktierten Kreis 31 angedeuteten Bereichs des Faserendstücks. Die Führungshülse 29 weist eine verspiegelte Abdeckung 32 für den Mantelbereich und eine runde Lichteintrittsöffnung 33 für den Kernbereich der Stirnfläche des Lichtwellenleiters 3 auf. Der Lichtwellenleiter 3 ist mit der Führungshülse 29 verlötet oder verklebt. Im Falle einer Einmodenfaser beträgt der Durchmesser der Lichteintrittsöffnung 33 etwa 10 um.

Fertigungstechnisch hat diese Ausführung den erheblichen Vorteil, daß der gesamte optische Baustein mit der Fokussierungsregelung und dem Gehäuse 28 schon vor dem Ankoppeln an das Lichtwellenleiterende funktionell vollständig getestet werden kann.

Die Konzentrizitätsabweichungen des Kerns 20 sind nach Herstellerangaben bei modernen Einmoden-Glasfasern nicht größer als ± 1 um, so daß durch die Zwangsführung des Lichtwellenleiters 3 in der Führungshülse 29 bei der Lichteinkopplung über die runde Eintrittsöffnung 33 keine nennenswerten Verluste an Lichtleistung auftreten.

4

EP 0 360 177 B1

Der erfindungsgemäße optische Baustein kann im Falle einer bidirektionalen optischen Nachrichtenübertragung sowohl als Sender wie auch als Empfänger eingesetzt werden, indem man einen Lichtdetektor 37 in der Mitte des Quadranten-Detektors 36 anordnet (Fig. 6). Damit der Lichtdetektor für hohe Bitraten einsetzbar ist, empfiehlt es sich, ihn kleinflächig auszuführen. Er kann z.B. als PIN- oder APD-Bauelement realisiert sein.

Der Quadranten-Detektor 36 mit integriertem zentralen Lichtdetektor 37 läßt sich auch auf einem einzigen Halbleiter-Chip realisieren, wodurch die Herstellungskosten merklich verringert werden.

Ein besonderer Vorteil des Ausführungsbeispiels nach Fig. 6 liegt darin, daß die aktive Regelung der Einkopplung des Laserlichts in den Lichtwellenleiter 3 gleichzeitig eine optimale Ausrichtung des Lichtdetektors 37 auf die aus dem Lichtwellenleiter 3 austretenden Lichtsignale gewährleistet. Damit werden mit einer Regelung die Verluste sowohl bei der Lichteinkopplung als auch bei der Lichtauskopplung minimiert.

**Patentansprüche**

1. Optischer Sende- und/oder Empfangsbaustein mit einem Licht ausstrahlenden und/oder empfangenden optoelektronischen Bauelement und einem Lichtsignale übertragenden Lichtwellenleiter, an dem die Lichteinkopplung oder -auskopplung erfolgt, **dadurch gekennzeichnet,** daß er mit einer Regeleinrichtung (16, 17, 18) versehen ist, durch die die Lichtein- bzw. -auskopplung zwischen dem optoelektronischen Bauelement (2) und dem Lichtwellenleiter (3) aufgrund von Messungen der Reflexionsfaktor-Unterschiede von Kern- und Mantelbereich (22, 23) der Stirnfläche (14) des Lichtwellenleiters (3) gesteuert wird, um die Lichtein- bsw. -auskopplung möglichst verlustfrei zu halten.

2. Optischer Baustein nach Anspruch 1, dadurch gekennzeichnet, daß der Mantelbereich (23) auf der Stirnfläche (14) des Lichtwellenleiters (3) mit einer Verspiegelung versehen ist.

3. Optischer Baustein nach Anspruch 1, dadurch gekennzeichnet, daß der Kernbereich (22) auf der Stirnfläche (14) des Lichtwellenleiters (3) mit einer Antireflexbeschichtung versehen ist.

4. Optischer Baustein nach Anspruch 1, dadurch gekennzeichnet, daß das Ende des Lichtwellenleiters (3) in eine Hülse (29) eingeführt ist, die eine ringförmige verspiegelte Abdeckung (32) für den Mantelbereich (23) des Lichtwellenleiters (3) und eine Lichteintrittsöffnung (33) für dessen Kernbereich (22) aufweist.

5. Optischer Baustein nach Anspruch 1, dadurch gekennzeichnet, daß aus dem Licht des optoelektronischen Bauelements (2) durch ein Kreuzgitter (5) in zwei unterschiedliche Ebenen gebeugte Strahlen (8, 9 und 10, 11) erzeugt werden, daß diese Strahlen (8 bis 11) auf die Stirnfläche (14) des Lichtwellenleiters (3) projiziert werden, und daß die von dort reflektierten Strahlen mittels eines Quadranten-Detektors (16) ausgewertet werden.

6. Optischer Baustein nach Anspruch 5, dadurch gekennzeichnet, daß durch ein mittels des Quadranten-Detektors (16) erzeugtes Fehlersignal eine Positioniereinrichtung (18) gesteuert wird und daß durch diese Positioniereinrichtung (18) ein die Lichtstrahlen auf den Kernbereich (22) der Lichtwellenleiter-Stirnfläche (14) fokussierendes Linsensystem (12, 13) angetrieben wird.

7. Optischer Baustein nach Anspruch 1, dadurch gekennzeichnet, daß in den Strahlengang zwischen dem optoelektronischen Bauelement (2) und dem Lichtwellenleiter (3) eine zylindrische Linse eingefügt ist, und daß die Fokussierung des ein- oder ausgekoppelten Lichts durch Auswertung der durch die Linse erzeugten astigmatischen Verzerrung mittels der Regeleinrichtung erfolgt.

8. Optischer Baustein nach Anspruch 1, dadurch gekennzeichnet, daß er einen Quadranten-Detektor (36) aufweist, der mit einem integrierten zentralen Fotodetektor (37) versehen ist.

9. Optischer Baustein nach Anspruch 1, dadurch gekennzeichnet, daß er versehen ist mit einem holographischen Optoelement, das als Strahlenteiler und Zylinderlinse dient, sowie mit einem Hybrid-Baustein, das einen Laser und einen Detektor enthält.

5

## Claims

**1.** An optical transmitter and/or receiver module comprising a light-emitting and/or light-receiving optoelectronic component and a light-signal-transmitting optical waveguide coupled thereto, **characterized in** that it is provided with a control facility (16, 17, 18) which controls the coupling of light between the optoelectronic component (2) and the optical waveguide (3) on the basis of measurements of the differences in reflection factor between the core region (22) and the cladding region (23) of the end face (14) of the optical waveguide (3) to minimize coupling losses.

**2.** An optical module as claimed in claim 1, characterized in that the cladding region (23) of the end face (14) of the optical waveguide (3) is provided with a reflecting coating.

**3.** An optical module as claimed in claim 1, characterized in that the core region (22) of the end face (14) of the optical waveguide (3) is provided with an antireflection coating.

**4.** An optical module as claimed in claim 1, characterized in that the end of the optical waveguide (3) is enclosed in a sleeve (29) having an annular reflecting cover (32) for the cladding region (23) of the optical waveguide (3) and a light entry port (33) for the core region (22).

**5.** An optical module as claimed in claim 1, characterized in that beams (8, 9 and 10, 11) diffracted in two different planes are produced from the light of the optoelectronic component (2) by means of a crossed grating (5), that said beams (8 to 11) are projected onto the end face (14) of the optical waveguide (3), and that the beams reflected therefrom are evaluated by means of a quadrant detector (16).

**6.** An optical module as claimed in claim 5, characterized in that a positioning device (18) is controlled by an error signal produced by the quadrant detector (16) and drives a lens system (12, 13) which focuses the light beams onto the core region (22) of the end face (14) of the optical waveguide (3).

**7.** An optical module as claimed in claim 1, characterized in that a cylindrical lens is positioned in the beam path between the optoelectronic component (2) and the optical waveguide (3), and that the light coupled to or from the optical waveguide is focused by evaluating the lens-induced astigmatic difference of focus by means of the control facility.

**8.** An optical module as claimed in claim 1, characterized in that it includes a quadrant detector (36) provided with an integrated central photodetector (37).

**9.** An optical module as claimed in claim 1, characterized in that it is provided with a holographic optical element and a hybrid module, said holographic optical element acting as a beam splitter and a cylindrical lens, and said hybrid module containing a laser and a detector.

## Revendications

**1.** Elément émetteur et/ou récepteur comportant un élément optoélectronique rayonnant et/ou recevant la lumière et un guide d'ondes lumineuses qui transmet les signaux lumineux et sur lequel se fait le couplage ou le découplage de la lumière, élément caractérisé par le fait qu'il comporte un dispositif de régulation (16,17,18) par lequel le couplage ou le découplage de la lumière entre l'élément opto-électronique (2) et le guide d'ondes lumineuses (3) est commandé sur la base de mesures des différences de facteur de réflexion de la zone formant le coeur et de la zone formant la gaine (22,23) de la surface frontale (14) du guide d'ondes lumineuses (3), pour maintenir le plus possible exempt de pertes le couplage ou le découplage de la lumière.

**2.** Elément optique selon la revendication 1, caractérisé par le fait que la zone (23) qui forme la gaine sur la surface frontale (14) du guide d'ondes lumineuses (3) présente une métallisation.

**3.** Elément optique selon la revendication 1, caractérisé par le fait que le zone (22) qui forme le noyau sur la surface frontale (14) du guide d'ondes lumineuses (3) présente un revêtement antireflet.

**4.** Elément optique selon la revendication 1, caractérisé par le fait que l'extrémité du guide d'ondes lumineuses (3) est introduite dans une enveloppe (29) qui présente un revêtement métallisé (32) de forme annulaire pour la zone (23) formant la gaine du guide d'ondes lumineuses (3) et une ouverture (33) d'entrée de lumière pour sa zone (22) formant le coeur.

**5.** Elément optique selon la revendication 1, caractérisé par le fait qu'à partir de la lumière de l'élément opto-électronique (2), on produit, au moyen d'un réseau en croix (5), des faisceaux (8, 9 et 10, 11) diffractés dans deux plans différents, par le fait que ces faisceaux (8 à 11) se projettent sur la surface frontale (14) du guide d'ondes lumineuses (3) et que l'on traite les faisceaux qui en sont réfléchis au moyen d'un détecteur à quadrants (16).

**6.** Elément optique selon la revendication 5, caractérisé par le fait qu'un dispositif de positionnement (18) est commandé par un signal d'erreur produit au moyen du détecteur à quadrants (16) et par le fait qu'un système de lentilles (12,13), qui focalise les faisceaux lumineux sur la zone (22) formant le coeur de la surface frontale (14) du guide d'ondes lumineuses active ce dispositif de positionnement (18).

**7.** Elément optique selon la revendication 1, caractérisé par le fait que sur le chemin des rayons entre l'élément opto-électronique (2) et le guide d'ondes lumineuses (3) est disposée une lentille cylindrique et par le fait que la focalisation de la lumière couplée ou découplée se fait, au moyen du dispositif de régulation, par traitement de la distorsion astigmatique produite par la lentille.

**8.** Elément optique selon la revendication 1, caractérisé par le fait qu'il présente un détecteur à quadrants (36) qui comporte un photo-détecteur (37) central intégré.

**9.** Elément optique selon la revendication 1, caractérisé par le fait qu'il comporte un opto-élément holographique qui sert de diviseur de faisceau et de lentille cylindrique, ainsi qu'un élément hybride qui contient un laser et un détecteur.

FIG.1

FIG.2A

FIG.3A

FIG.2B

FIG.3B

FIG.2C

FIG.3C

FIG.4

FIG.6

FIG.5